# EUROPEAN PATENT SPECIFICATION

(11) **EP 4 607 733 B1**
(45) Date of publication and mention of the grant of the patent: **11.02.2026**
(21) Application number: 24382181.6
(22) Date of filing: 21.02.2024
(51) Int. Cl.: H02J 3/01

(54) **HARMONIC FILTER FOR ALTERNATING CURRENT INSTALLATIONS**
OBERWELLENFILTER FÜR WECHSELSTROMANLAGEN
FILTRE HARMONIQUE POUR INSTALLATIONS DE COURANT ALTERNATIF

(43) Date of publication of application: 27.08.2025
(73) Proprietor: ista SE, 45131 Essen (DE)
(72) Inventor: GUERRERO PÉREZ, Jorge, 45131 Essen (DE)
(74) Representative: Ungria López, Javier

(56) References cited:
- CA-A1- 2 689 029

## Description

### FIELD OF THE INVENTION

Single-phase and three-phase alternating current installations, as well as devices that operate with alternating current, such as motors, inverters, transformers and generally all devices that generate harmonics in their normal operation.

### BACKGROUND OF THE INVENTION

The harmonic filters of the state of the art are mainly made up of coils and capacitors to eliminate harmonics, especially odd order harmonics starting from the third-order harmonic, which are the most detrimental to single-phase and three-phase alternating current installations.

Of the two main elements in harmonic filters, capacitors have the greatest weight and size and they also tend to deteriorate.

Therefore, it would be desirable to find a harmonic filter for single-phase and three-phase alternating current installations that do not have capacitors.

CA 2 689 029 A1 discloses a device for filtering harmonics in which the inductors can be wound in different directions (i.e. clockwise or counter clockwise), thus affecting the mutual or electromagnetic coupling between the inductors.

### DESCRIPTION OF THE INVENTION

To solve the aforementioned problems that are related to the deterioration of capacitors for harmonic filters, the present invention discloses several configurations for the harmonic filter according to different aspects of the invention.

In a first aspect of the invention, a harmonic filter is disclosed for single-phase alternating current electrical installations, which comprise a phase and a neutral having an "AC" alternating current. The single-phase harmonic filter comprises:
- a phase input of the filter, which is connectable to a phase output of a single-phase voltage source;
- a neutral input of the filter, which is connectable to the neutral output of the single-phase voltage source, and is connectable to a neutral input of a single-phase RLC load;

- a phase output of the filter, which is connectable with a phase input of the single-phase RLC load;
- a first helical coil, arranged in series between the phase input and the phase output of the filter;
- a second helical coil, arranged in series between the phase input of the filter and the neutral input of the filter;
- a ferromagnetic core around which the first helical coil and the second helical coil are wound;
where the first helical coil has a winding direction opposite to the winding direction of the second helical coil.

The single-phase harmonic filter additionally comprises a third helical coil, which has the same winding direction as the second helical coil. Furthermore, the ends of the third helical coil are connected to each other forming a closed circuit.

In a second aspect of the invention, a harmonic filter is disclosed for three-phase alternating current electrical installations, which comprise three phases and a neutral having an "AC" alternating current. The three-phase harmonic filter comprises:
- a three-phase phase input of the filter, which is connectable to a three-phase phase output of a three-phase voltage source;
- a neutral line of the filter;
- a three-phase phase output of the filter, which is connectable with a three-phase input of a three-phase RLC load;
- three phase lines, where each phase line joins one phase output of the three-phase phase output to the neutral line; and,
- a ferromagnetic core;
where each phase line comprises:
- a first helical coil, arranged in series between the three-phase phase input of the filter and the three-phase phase output of the filter;
- a second helical coil, arranged in series between the three-phase phase input of the filter and the neutral line of the filter;
- where the first helical coil and the second helical coil are wound around the ferromagnetic core, and where the first helical coil has a winding direction opposite to the winding direction of the second helical coil.

The three-phase harmonic filter, for each of the phase lines, additionally comprises a third helical coil, where the third helical coil has the same winding direction as the second helical coil, and where some ends of the third helical coil are connected to each other forming a closed circuit.

The harmonic filter of the present invention can be used as a voltage booster or as a voltage reducer by modifying the turns of the first helical coil and of the second helical coil as is known in the state of the art, giving rise to the aspects of the invention that are listed below.

In a third aspect of the invention, a single-phase voltage booster is disclosed comprising a harmonic filter according to the first aspect of the invention.

In a fourth aspect of the invention, a three-phase voltage booster is disclosed comprising a harmonic filter according to the second aspect of the invention.

In a fifth aspect of the invention, a single-phase voltage reducer is disclosed comprising a harmonic filter according to the first aspect of the invention.

In a sixth aspect of the invention, a three-phase voltage reducer is disclosed comprising a harmonic filter according to the second aspect of the invention.

### BRIEF DESCRIPTION OF THE FIGURES

Figure 1 shows a harmonic filter, according to the present invention, for a single-phase alternating current installation;
Figure 2 shows a harmonic filter, according to the present invention, for a three-phase alternating current installation.

### DESCRIPTION OF VARIOUS EXEMPLARY EMBODIMENTS OF THE INVENTION

### Reference list.

- 1.: Single-phase harmonic filter;
- 2.: Three-phase harmonic filter;
- 3.: Winding direction to the left;
- 4.: Winding direction to the right;
- 5.: Single-phase AC voltage source;
- 6.: Three-phase AC voltage source with phases R,S,T; 6', 6", 6"': three- phase phase lines R, S, T;
- 7.: Single-phase RLC load;
- 8.: Three-phase RLC load;
- 9.: 9'.: Ferromagnetic core;
- 10.: First single-phase helical coil; 10', 10", 10‴: first three-phase helical coil for phases R, S and T, respectively;
- 11.: Second single-phase helical coil; 11', 11", 11‴: second three-phase helical coil for phases R, S and T, respectively;
- 12.: Third helical coil of the single-phase filter;
- 13.: Third helical coil of the phase R of the three-phase filter;
- 14.: Third helical coil of the phase S of the three-phase filter;
- 15.: Third helical coil of the phase T of the three-phase filter;
- 16.: Input "R" of the three-phase filter; 16': input "S" of the three-phase filter; 16": input "T" of the three-phase filter;
- 17.: Neutral line of the three-phase filter;
- 18.: Three-phase phase outputs of the filter 2; 18: phase output "R"; 18': phase output "S"; 18": phase output "T";
- 19.: Phase input "R" of the three-phase RLC load; 19'.: phase input "S" of the three-phase RLC load; 19".: phase input "T" of the three-phase RLC load;
- 20.: Phase input of the single-phase filter;
- 21.: Neutral line of the single-phase filter;
- 22.: Phase input of the single-phase load;
- 23.: Neutral input of the single-phase load;

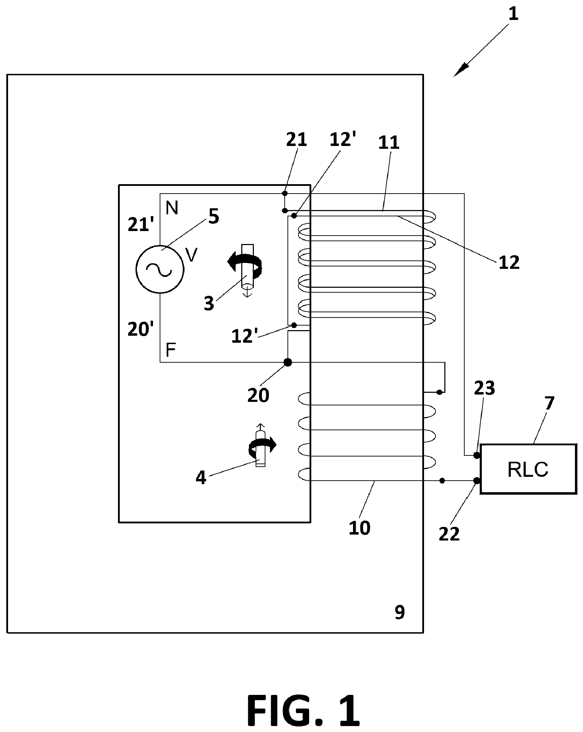

Figure 1 shows a single-phase harmonic filter (1) according to an exemplary embodiment of the present invention, where the harmonic filter (1) has two helical coils (10,11) connected in series to each other, and a magnetic core (9) around which both helical coils (10,11) are wound in opposite directions (3,4). Since the helical coils are wound in opposite directions (3,4), the currents generated in the magnetic core have opposite directions, leading to their cancellation, which causes the attenuation, and even complete cancellation, of the odd harmonics of third order and higher.

The harmonic filter (1) is designed for single-phase alternating current electrical installations, which comprise a phase and a neutral having an "AC" alternating current. Thus, the harmonic filter (1) comprises the first helical coil (10) connected in series with the second helical coil (11), and the magnetic core (9) around which the first helical coil (10) and the second helical coil (11) are wound in opposite directions. The harmonic filter (1) has the phase input of the filter (20) located at the junction between one end of the first helical coil (10) and one end of the second helical coil (11).

Continuing with Figure 1, it is observed that the phase input of the filter (20) is connected to the phase output (20') of the single-phase AC voltage source (5). The phase output of the filter (22) is located at the other end of the first helical coil (10). The phase output of the filter (22) is connected to the RLC load (7). The neutral line (21) (also called neutral input/output 21) is connected to the neutral output (21') of the single-phase AC voltage source (5) and to the neutral input (23) of the single-phase RLC load (7).

Finally, and according to the embodiment of Figure 1, the harmonic filter (1) has a third helical coil (12) wound in the same direction as the second helical coil (11), where the ends (12', 12") of the third helical coil (12) are connected to each other forming a "closed circuit". The third helical coil (12) has the technical effect of reducing the energy consumption of the filter (1) when there is no RLC load (7) connected to the output of the filter.

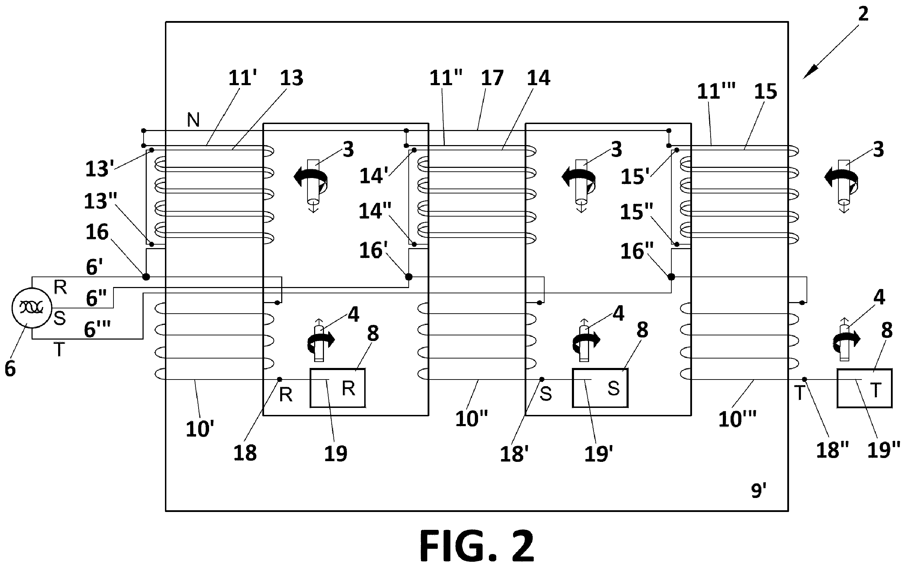

On the other hand, Figure 2 shows a three-phase harmonic filter (2) according to an exemplary embodiment of the present invention for three-phase alternating current electrical installations, which comprise three phases (6,6',6") and the neutral (17) having an "AC" alternating current. The harmonic filter for three-phase currents (2) shown in Figure 2 comprises:
- the phase input "R" of the filter (16), which is connectable to the phase output "R" (6') of the three-phase voltage source (6);
- the phase input "S" of the filter (16'), which is connectable to the phase output "S" (6") of the three-phase voltage source (6);
- the phase input "T" of the filter (16"), which is connectable to the phase output "S" (6‴) of the three-phase voltage source (6);
- the neutral line of the filter (17);
- the phase output "R" of the filter (18), which is connectable to the phase input "R" (19) of the three-phase RLC load (8);
- the phase output "S" of the filter (18'), which is connectable to the phase input "S" (19') of the three-phase RLC load (8);
- the phase output "T" of the filter (18"), which is connectable to the phase input "T" (19") of the three-phase RLC load (8);
- the first helical coil "R" (10'), arranged in series between the phase input "R" (16) and the phase output "R" of the filter (18);
- the second helical coil "R" (11'), arranged in series between the phase input "R" (16) of the filter and the neutral line of the filter (17);
- the ferromagnetic core (9') around which the first helical coil "R" (10') and the second helical coil "R" (11') are wound, where the first helical coil (10') has a winding direction (4) opposite to the winding direction (3) of the second helical coil (11');
- the first helical coil "S" (10"), arranged in series between the phase input "S" (16') and the phase output "S" of the filter (18');
- the second helical coil "S" (11'), arranged in series between the phase input "S" (16') of the filter and the neutral line of the filter (17);
- where the first helical coil (10") and the second helical coil (11") are wound around the ferromagnetic core (9'), and where the first helical coil "S" (10") has a winding direction (4) opposite to the winding direction (3) of the second helical coil "S" (11");
- the first helical coil "T" (10‴), arranged in series between the phase input "T" (16") and the phase output "T" of the filter (18");
- the second helical coil "T" (11‴), arranged in series between the phase input "T" (16") of the filter and the neutral line of the filter (17);
- where the first helical coil "T" (10‴) and the second helical coil "T" (11‴) are wound around the ferromagnetic core (9'), and where the first helical coil "T" (10‴) has a winding direction (4) opposite to the winding direction (3) of the second helical coil "T" (11‴).

In a similar way to the case of the single-phase filter shown in Figure 1, the three-phase filter (2) shown in Figure 2 has the helical coils wound in opposite directions (3,4). This causes the currents generated in the magnetic core to have opposite directions, leading to their cancellation, which causes the attenuation, and even complete cancellation, of the odd harmonics of third order and higher.

The three-phase harmonic filter (2) for single-phase alternating current electrical installations shown in Figure 2 additionally comprises the third helical coil "R" (13), which has the same winding direction (3) as the second helical coil "R" (11'). The ends (13', 13") of the third helical coil "R" (13) are connected to each other forming a closed circuit.

The three-phase harmonic filter (2) for single-phase alternating current electrical installations shown in Figure 2 additionally comprises the third helical coil "S" (14), which has the same winding direction (3) as the second helical coil "S" (11"). The ends (14', 14") of the third helical coil "S" (14) are connected to each other forming a closed circuit.

The three-phase harmonic filter (2) for single-phase alternating current electrical installations shown in Figure 2 additionally comprises the third helical coil "T" (15), which has the same winding direction (3) as the second helical coil "T" (11"'). The ends (15', 15") of the third helical coil "T" (15) are connected to each other forming a closed circuit.

## Claims

1. A harmonic filter for single-phase alternating current electrical installations, which comprise a phase and a neutral having an "AC" alternating current; the filter comprises:
• a phase input of the filter (20), which is connectable to a phase output (20') of a single-phase voltage source (5);
• a neutral input of the filter (21), which is connectable to the neutral output of the single-phase voltage source (5), and is connectable to a neutral input (23) of a single-phase RLC load (7);
• a phase output of the filter, which is connectable with a phase input (22) of the single-phase RLC load (7);
• a first helical coil (10), arranged in series between the phase input (20) and the phase output of the filter (22);
• a second helical coil (11), arranged in series between the phase input (20) of the filter and the neutral input of the filter (21);
• a ferromagnetic core (9) around which the first helical coil (10) and the second helical coil (11) are wound;
where the first helical coil (10) has a winding direction (4) opposite to the winding direction (3) of the second helical coil (11); **characterised in that** the filter further comprises a third helical coil (12), where the third helical coil (12) has the same winding direction (3) as the second helical coil (11), and where ends (12', 12") of the third helical coil (12) are connected to each other forming a closed circuit.

2. A harmonic filter for three-phase alternating current electrical installations, which comprise three phases (6,6',6") and a neutral (17) having an "AC" alternating current; the filter (2) comprises:
• a three-phase phase input of the filter (16, 16', 16"), which is connectable to a three-phase phase output (6', 6", 6‴) of a three-phase voltage source (6);
• a neutral line of the filter (17);
• a three-phase phase output of the filter (18, 18', 18"), which is connectable with a three-phase input (19, 19', 19") of a three-phase RLC load (8);
• three phase lines (10', 11'; 10", 11"; 10‴, 11‴), where each phase line joins one phase output of the three-phase phase output (18, 18', 18") to the neutral line (17); and,
• a ferromagnetic core (9');
where each phase line (10', 11'; 10", 11"; 10‴, 11‴) comprises:
• a first helical coil (10', 10", 10"'), arranged in series between the three-phase phase input of the filter (16, 16', 16") and the three-phase phase output of the filter (18, 18', 18");
• a second helical coil (11', 11", 11‴), arranged in series between the three-phase phase input of the filter (16, 16', 16") and the neutral line of the filter (17);
• where the first helical coil (10', 10", 10‴) and the second helical coil (11', 11", 11‴) are wound around the ferromagnetic core (9'), and where the first helical coil (10', 10", 10"') has a winding direction (4) opposite to the winding direction (3) of the second helical coil (11', 11", 11‴);
**characterised in that**, for each of the phase lines (10', 11'; 10", 11"; 10‴, 11‴), the filter further comprises a third helical coil (13, 14, 15), where the third helical coil (13, 14, 15) has the same winding direction (3) as the second helical coil (11', 11", 11‴), and where ends (13',13"; 14',14"; 15',15") of the third helical coil (13, 14, 15) are connected to each other forming a closed circuit.

3. A single-phase voltage booster comprising a harmonic filter according to claim 1.

4. A three-phase voltage booster comprising a harmonic filter according to claim 2.

5. A single-phase voltage reducer comprising a harmonic filter according to claim 1.

6. A three-phase voltage reducer comprising a harmonic filter according to claim 2.

## Patentansprüche

1. Oberschwingungsfilter für einphasige Wechselstrom-Elektroanlagen, die eine Phase und einen Neutralleiter mit einem "AC"-Wechselstrom aufweisen; wobei der Filter aufweist:
• einen Phaseneingang (20) des Filters, der mit einem Phasenausgang (20') einer einphasigen Spannungsquelle (5) verbindbar ist;
• einen Neutralleiter-Eingang des Filters (21), der mit dem Neutralleiter-Ausgang der einphasigen Spannungsquelle (5) und mit einem Neutralleiter-Eingang (23) einer einphasigen RLC-Last (7) verbindbar istu;
• einen Phasenausgang des Filters, der mit einem Phaseneingang (22) der einphasigen RLC-Last (7) verbindbar ist;
• eine erste spiralförmige Spule (10), die in Reihe zwischen dem Phaseneingang (20) und dem Phasenausgang des Filters (22) angeordnet ist;
• eine zweite spiralförmige Spule (11), die in Reihe zwischen dem Phaseneingang (20) des Filters und dem Neutralleiter-Eingang des Filters (21) angeordnet ist;
• einen ferromagnetischen Kern (9), um den die erste spiralförmige Spule (10) und die zweite spiralförmige Spule (11) gewickelt sind;
wobei die erste spiralförmige Spule (10) eine Wicklungsrichtung (4) hat, die einer Wicklungsrichtung (3) der zweiten spiralförmigen Spule (11) entgegengesetzt ist; **dadurch gekennzeichnet, dass** der Filter ferner eine dritte spiralförmige Spule (12) aufweist, wobei die dritte spiralförmige Spule (12) die gleiche Wicklungsrichtung (3) wie die zweite spiralförmige Spule (11) aufweist und wobei Enden (12', 12") der dritten spiralförmigen Spule (12) miteinander verbunden sind und einen geschlossenen Stromkreis bilden.

2. Oberschwingungsfilter für dreiphasige Wechselstrom-Elektroanlagen, die drei Phasen (6, 6', 6") und einen Neutralleiter (17) mit einem "AC"-Wechselstrom aufweisen; wobei der Filter (2) aufweist:
• einen Dreiphasen-Phaseneingang (16, 16', 16") des Filters, der mit einem Dreiphasen-Phasenausgang (6', 6", 6‴) einer Dreiphasen-Spannungsquelle (6) verbindbar ist;
• eine Neutralleitung des Filters (17);
• einen Dreiphasen-Phasenausgang (18, 18', 18") des Filters, der mit einem Dreiphasen-Eingang (19, 19', 19") einer Dreiphasen-RLC-Last (8) verbindbar ist;
• drei Phasenleitungen (10', 11'; 10", 11"; 10‴, 11‴), wobei jede Phasenleitung einen Phasenausgang des Dreiphasen-Phasenausgangs (18, 18', 18") mit der Neutralleitung (17) verbindet; und
• einen ferromagnetischen Kern (9');
wobei jede Phasenleitung (10', 11'; 10", 11"; 10"', 11‴) aufweist:
• eine erste spiralförmige Spule (10', 10", 10‴), die in Reihe zwischen dem Dreiphasen-Phaseneingang des Filters (16, 16', 16") und dem Dreiphasen-Phasenausgang des Filters (18, 18', 18") angeordnet ist;
• eine zweite spiralförmige Spule (11', 11", 11‴), die in Reihe zwischen dem Dreiphasen-Phaseneingang des Filters ( 16, 16', 16") und der Neutralleitung des Filters (17) in Reihe geschaltet ist;
• wobei die erste spiralförmige Spule (10', 10", 10"') und die zweite spiralförmige Spule (11', 11", 11‴) um den ferromagnetischen Kern (9') gewickelt sind und wobei die erste spiralförmige Spule (10', 10", 10"') eine Wicklungsrichtung (4) hat, die einer Wicklungsrichtung (3) der zweiten spiralförmigen Spule (11', 11", 11‴) entgegengesetzt ist; **dadurch gekennzeichnet, dass** für jede der Phasenleitungen (10', 11'; 10", 11"; 10‴, 11‴) der Filter ferner eine dritte spiralförmige Spule (13, 14, 15) aufweist, wobei die dritte spiralförmige Spule (13, 14, 15) die gleiche Wicklungsrichtung (3) wie die zweite spiralförmige Spule (11', 11", 11‴) aufweist und wobei Enden (13', 13"; 14', 14"; 15', 15") der dritten spiralförmigen Spule (13, 14, 15) miteinander verbunden sind und einen geschlossenen Stromkreis bilden.

3. Einphasen-Spannungshochsetzer mit einem Oberschwingungsfilter nach Anspruch 1.

4. Dreiphasen-Spannungshochsetzer mit einem Oberschwingungsfilter nach Anspruch 2.

5. Einphasen-Spannungsreduzierer mit einem Oberschwingungsfilter nach Anspruch 1.

6. Dreiphasen-Spannungsreduzierer mit einem Oberschwingungsfilter nach Anspruch 2.

## Revendications

1. Filtre harmonique pour installations électriques à courant alternatif monophasé, qui comprennent une phase et un neutre ayant un courant alternatif « AC » ; le filtre comprend :
• une entrée de phase du filtre (20) qui peut être raccordée à une sortie de phase (20') d'une source de tension monophasée (5) ;
• une entrée de neutre du filtre (21), qui peut être raccordée à la sortie de neutre de la source de tension monophasée (5) et peut être raccordée à une entrée de neutre (23) d'une charge RLC monophasée (7) ;
• une sortie de phase du filtre, qui peut être raccordée avec une entrée de phase (22) de la charge RLC monophasée (7) ;
• une première bobine hélicoïdale (10) agencée en série entre l'entrée de phase (20) et la sortie de phase du filtre (22) ;
• une deuxième bobine hélicoïdale (11) agencée en série entre l'entrée de phase (20) du filtre et l'entrée de neutre du filtre (21) ;
• un noyau ferromagnétique (9) autour duquel la première bobine hélicoïdale (10) et la deuxième bobine hélicoïdale (11) sont enroulées ;
dans lequel la première bobine hélicoïdale (10) a une direction d'enroulement (4) opposée à la direction d'enroulement (3) de la deuxième bobine hélicoïdale (11) ; **caractérisé en ce que** le filtre comprend en outre une troisième bobine hélicoïdale (12), où la troisième bobine hélicoïdale (12) a la même direction d'enroulement (3) que la deuxième bobine hélicoïdale (11), et où les extrémités (12', 12") de la troisième bobine hélicoïdale (12) sont raccordées entre elles formant un circuit fermé.

2. Filtre harmonique pour installations électriques à courant alternatif triphasé, qui comprennent trois phases (6, 6', 6") et un neutre (17) ayant un courant alternatif « AC » ; le filtre (2) comprend :
• une entrée de phase triphasée du filtre (16, 16', 16"), qui peut être raccordée à une sortie de phase triphasée (6', 6", 6‴) d'une source de tension triphasée (6) ;
• une ligne de neutre du filtre (17) ;
• une sortie de phase triphasée du filtre (18, 18', 18"), qui peut être raccordée avec une entrée triphasée (19, 19', 19") d'une charge RLC triphasée (8) ;
• trois lignes de phase (10', 11' ; 10", 11" ; 10"', 11"'), où chaque ligne de phase assemble une sortie de phase de la sortie de phase triphasée (18, 18', 18") à la ligne de neutre (17) ; et
• un noyau ferromagnétique (9') ;
où chaque ligne de phase (10', 11' ; 10", 11" ; 10"', 11‴) comprend :
• une première bobine hélicoïdale (10', 10", 10‴) agencée en série entre l'entrée de phase triphasée du filtre (16, 16', 16") et la sortie de phase triphasée du filtre (18, 18', 18") ;
• une deuxième bobine hélicoïdale (11', 11", 11"') agencée en série entre l'entrée de phase triphasée du filtre (16, 16', 16") et la ligne de neutre du filtre (17) ;
• où la première bobine hélicoïdale (10', 10", 10"') et la deuxième bobine hélicoïdale (11', 11", 11‴) sont enroulées autour du noyau ferromagnétique (9'), et où la première bobine hélicoïdale (10', 10", 10‴) a une direction d'enroulement (4) opposée à la direction d'enroulement (3) de la deuxième bobine hélicoïdale (11', 11", 11‴) ;
**caractérisé en ce que**, pour chacune des lignes de phase (10', 11' ; 10", 11" ; 10‴, 11‴), le filtre comprend en outre une troisième bobine hélicoïdale (13, 14, 15), où la troisième bobine hélicoïdale (13, 14, 15) a la même direction d'enroulement (3) que la deuxième bobine hélicoïdale (11', 11", 11‴) et où les extrémités (13', 13" ; 14', 14" ; 15', 15") de la troisième bobine hélicoïdale (13, 14, 15) sont raccordées entre elles formant un circuit fermé.

3. Survolteur monophasé comprenant un filtre harmonique selon la revendication 1.

4. Survolteur triphasé comprenant un filtre harmonique selon la revendication 2.

5. Réducteur de tension monophasé comprenant un filtre harmonique selon la revendication 1.

6. Réducteur de tension triphasé comprenant un filtre harmonique selon la revendication 2.
